# EUROPEAN PATENT APPLICATION

(11) **EP 4 502 424 A1**
(43) Date of publication of application: **05.02.2025**
(21) Application number: 23779914.3
(22) Date of filing: 22.03.2023
(51) Int. Cl.: F16H 25/24, F16H 25/22, F16J 15/10

(54) **BALL SCREW DEVICE**

(30) Priority: 31.03.2022 JP 2022058403
(71) Applicant: NSK Ltd., Tokyo 141-8560 (JP)
(72) Inventor: KAWAI, Ruito, Fujisawa-shi, Kanagawa 252-0811 (JP)
(74) Representative: SSM Sandmair
(86) International application number: PCT/JP2023/011120
(87) International publication number: WO 2023/189901

(57) **Abstract**

A ball screw device includes a nut, a screw shaft, a ball, and a coolant flow path. The nut includes a nut body in which a recessed groove is provided on a first end surface of an axial end portion, a seal member fitted into the recessed groove, and an annular cap sealing the recessed groove. The coolant flow path includes a plurality of axial flow paths and a circumferential flow path extending in a circumferential direction, and the circumferential flow path is formed by sealing the recessed groove of the nut body with the cap. The seal member includes an annular frame body and a reinforcing portion connecting long sides of the frame body when viewed from an axial direction. The seal member extends in an arc shape along the recessed groove.

## Description

### Field

The present disclosure relates to a ball screw device.

### Background

A ball screw device includes, for example, a nut having an inner circumferential track groove, a screw shaft penetrating through the nut and having an outer circumferential track groove, a plurality of balls arranged between the inner circumferential track groove and the outer circumferential track groove, and a coolant flow path provided inside the nut and through which a coolant flows (see Patent Literature 1). The coolant flow path includes an axial flow path extending in an axial direction of the nut and a circumferential flow path extending in a circumferential direction of the nut. The circumferential flow path is formed by a circumferential groove formed at an axial end portion of the nut and opened to the outside in the axial direction, a seal member fitted to an end portion of an inner wall of the circumferential groove to seal the circumferential groove, and a sealing member that is in contact with the seal member to seal the circumferential groove. When viewed from the axial direction of the nut, the seal member has an annular shape extending in the circumferential direction of the nut.

### Citation List

### Patent Literature

Patent Literature 1: JP 3217729 U

### Summary

### Technical Problem

In Patent Literature 1, for example, in a case where the sealing member is bolted to the axial end portion of the nut, the seal member receives a force in the circumferential direction or a radial direction when a bolt is fastened. In addition, in a case where thermal deformation occurs at the axial end portion of the nut during use of the ball screw device, a force is applied to the seal member in the circumferential direction or the radial direction. In these cases, the seal member may be deformed, as a result of which, airtightness of the circumferential groove may be reduced.

The present disclosure has been made in view of the above-described problems, and an object of the present disclosure is to provide a ball screw device including a seal member whose deformation amount is smaller when attached to a nut or during use of the ball screw device. Solution to Problem

To achieve the above object, a ball screw device according to an embodiment comprising:
a nut having an inner circumferential track groove provided on an inner circumferential portion and including a plurality of axial flow paths through which a coolant flows in an axial direction;
a screw shaft penetrating through the nut and having an outer circumferential track groove provided on an outer circumferential portion; and
a plurality of balls arranged between the inner circumferential track groove and the outer circumferential track groove, wherein
the nut includes:
   a nut body in which a recessed groove is provided on a first end surface arranged at at least one axial end portion of one end portion or the other end portion in the axial direction along a central axis;
   a seal member fitted into the recessed groove; and
   a cap attached to the axial end portion in a state of covering the recessed groove of the first end surface, and closing a circumferential flow path in which the coolant flows in a circumferential direction in the recessed groove communicating between end portions of two of the plurality of axial flow paths,
   the recessed groove includes:
      a first groove which is a recess recessed from the first end surface toward an axial center side and into which the seal member is fitted, the recess having an outer shape extending in the circumferential direction of the nut when viewed from the axial direction of the nut; and
      a second groove which is provided inside the first groove when viewed in the axial direction of the nut, which is recessed from a bottom portion of the first groove toward the axial center side, and in which the end portions of the two axial flow paths are exposed, and
      the seal member includes:
         a frame body extending along the first groove; and
         a reinforcing portion connecting a pair of long sides of the frame body.

In the ball screw of Patent Literature 1 described above, the seal member has an arc shape extending in the circumferential direction of the nut when viewed from the axial direction of the nut. Therefore, for example, when the sealing member is fastened to the axial end portion of the nut with a bolt, the seal member receives a force in the circumferential direction or the radial direction when the bolt is fastened. In addition, in a case where the axial end portion of the nut is thermally deformed during use of the ball screw device, a force is applied to the seal member in the circumferential direction or the radial direction. In these cases, the seal member may be deformed, as a result of which, airtightness of the circumferential groove may be reduced.

On the other hand, the seal member according to the present disclosure includes the frame body and the reinforcing portion connecting a pair of long sides of the frame body. Therefore, rigidity becomes higher than that of the seal member without the reinforcing portion, and a deformation amount becomes smaller when a force is applied in the circumferential direction or the radial direction. As a result, it is possible to provide the ball screw device including the seal member whose deformation amount is smaller when attached to the nut or during use of the ball screw device.

As a desirable embodiment, one reinforcing portion is provided, and the one reinforcing portion connects centers of the pair of long sides in the circumferential direction.

Therefore, the rigidity of the entire seal member becomes more uniform as compared with a case where portions other than the centers of the pair of long sides in the circumferential direction are connected to each other by the reinforcing portion. Since a force on the seal member may be input from various directions such as the circumferential direction and the radial direction, the deformation amount becomes smaller when the seal member receives a force in various directions such as the circumferential direction and the radial direction.

As a desirable embodiment, a plurality of the reinforcing portions are provided, and the plurality of reinforcing portions are arranged at equal intervals in the circumferential direction. Therefore, the rigidity of the entire seal member becomes more uniform as compared with a case where a plurality of reinforcing portions are arranged at unequal intervals in the circumferential direction. Since a force on the seal member may be input from various directions such as the circumferential direction and the radial direction of the nut, the deformation amount of the seal member becomes smaller.

As a desirable embodiment, the first groove faces an inner wall extending from the first end surface to the axial center side and a bottom portion extending from an end portion of the inner wall on the axial center side along the first end surface, and the seal member includes a cylindrical body having a circular cross section, and an outer surface of the cylindrical body is in line contact with the inner wall and the bottom portion in the first groove, and a back surface of the cap. With such a configuration, an outer surface of the seal member is uniformly brought into contact with the inner wall, the first bottom surface, and the back surface of the cap, and thus, airtightness achieved by the seal member is more reliably ensured.

As a desirable embodiment, the first groove faces an inner wall extending from the first end surface to the axial center side and a bottom portion extending from an end portion of the inner wall on the axial center side along the first end surface, and the seal member includes a prismatic body having a polygonal cross-sectional shape. With such a configuration, the polygon has at least one plane, and thus, the plane can be brought into surface contact with any one of the inner wall in the first groove, the first bottom surface, and the back surface of the cap. Therefore, the seal member can be stably attached to the nut.

As a desirable embodiment, the seal member includes a prismatic body having a quadrangular cross section, and three side surfaces of the prismatic body are in surface contact with the inner wall and the bottom portion in the first groove, and the back surface of the cap. As a result, the seal member can be stably arranged between the inner wall, the first bottom surface, and the back surface of the cap.

As a desirable embodiment, the seal member includes a prismatic body having a regular hexagonal cross section, and one side surface of the prismatic body is in surface contact with the inner wall in the first groove. Therefore, the seal member can be stably attached to the nut.

### Advantageous Effects of Invention

According to the present disclosure, it is possible to provide a ball screw device including a seal member whose deformation amount is smaller when attached to a nut or during use of the ball screw device.

### Brief Description of Drawings

FIG. 1 is an exploded perspective view of a ball screw device according to an embodiment.
FIG. 2 is a cross-sectional view of the ball screw device according to the embodiment.
FIG. 3 is a cross-sectional view taken along line III-III of FIG. 2.
FIG. 4 is a cross-sectional view taken along line IV-IV of FIG. 2.
FIG. 5 is a view illustrating a state in which a cap is removed from FIG. 4.
FIG. 6 is a cross-sectional view taken along line VI-VI of FIG. 3.
FIG. 7 is a cross-sectional view taken along line VII-VII of FIG. 3.
FIG. 8 is a cross-sectional view in which a seal member and the cap are removed from FIG. 7.
FIG. 9 is a plan view of the seal member illustrated in FIGS. 3 and 5.
FIG. 10 is a plan view of the seal member illustrated in FIG. 5.
FIG. 11 is a schematic plan view illustrating another example of the seal member.
FIG. 12 is a schematic view illustrating a flow of a coolant in a coolant flow path in a nut.
FIG. 13 is a cross-sectional view of a part of the ball screw device according to a first modification, and is a view corresponding to FIG. 6.
FIG. 14 is a cross-sectional view of a part of the ball screw device according to the first modification, and is a view corresponding to FIG. 7.
FIG. 15 is a plan view of a seal member according to the first modification.
FIG. 16 is a cross-sectional view of a part of the ball screw device according to a second modification, and is a view corresponding to FIG. 6.
FIG. 17 is a cross-sectional view of a part of the ball screw device according to the second modification, and is a view corresponding to FIG. 7.
FIG. 18 is a plan view of a seal member according to the second modification.

### Description of Embodiments

A mode (embodiment) for carrying out the present invention will be described in detail with reference to the drawings. The present invention is not limited by the contents described in the following embodiments. In addition, constituent elements described below include those that can be easily assumed by those skilled in the art and those that are substantially the same. Furthermore, the constituent elements described below can be appropriately combined. Furthermore, portions having the same structure are denoted by the same reference numerals, and a description thereof will be omitted. An X direction indicates an axial direction, and a Y direction and a Z direction indicate a radial direction. The Y direction and the Z direction are orthogonal to (intersect) the X direction. The Y direction is orthogonal to (intersects) the Z direction. An Xl side indicates one side in the axial direction, and an X2 side indicates the other side in the axial direction. A Y1 side is opposite to a Y2 side, and a Z1 side is opposite to a Z2 side.

### [Embodiments]

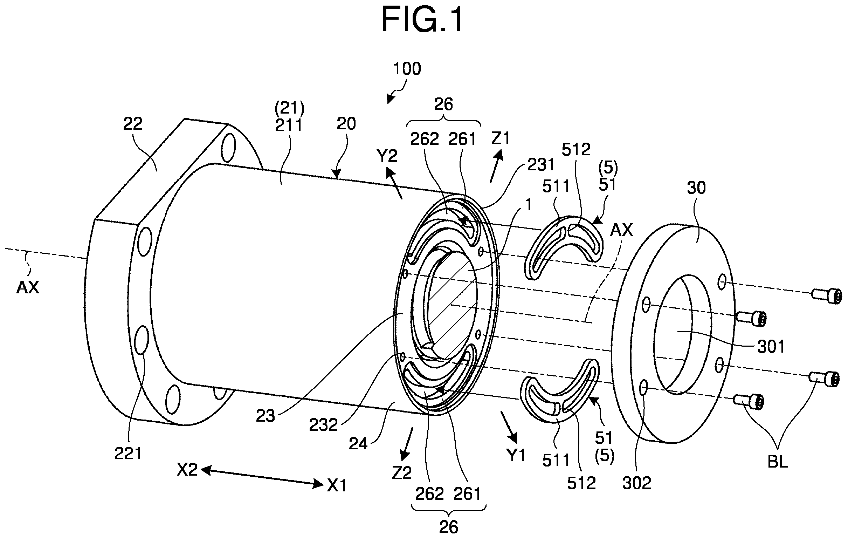

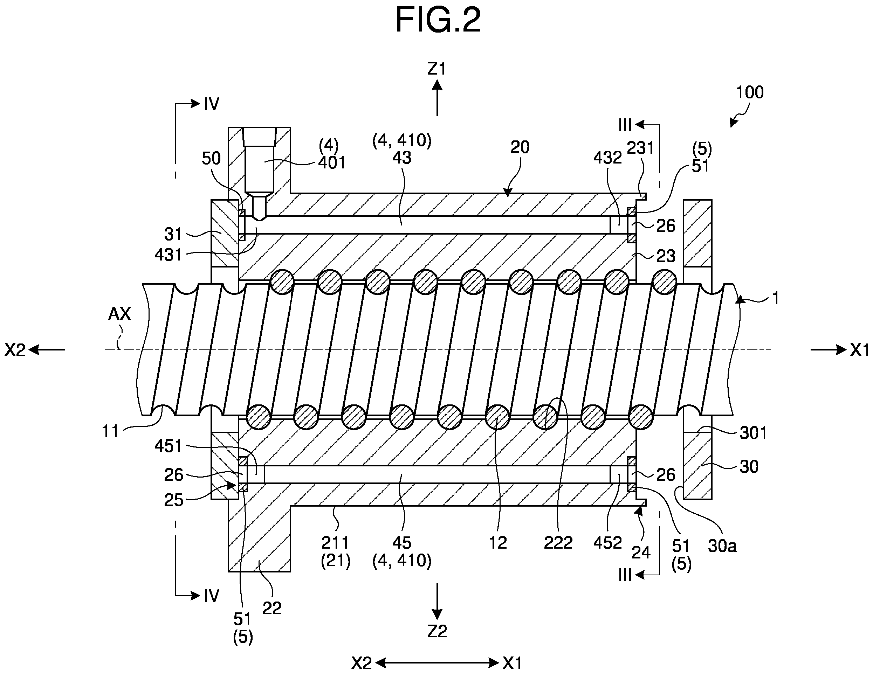

Hereinafter, embodiments will be described. FIG. 1 is an exploded perspective view of a ball screw device according to an embodiment. FIG. 2 is a cross-sectional view of the ball screw device according to the embodiment.

As illustrated in FIGS. 1 and 2, a ball screw device 100 according to the embodiment includes a screw shaft 1, a nut 2, a plurality of balls 12, and a coolant flow path 4.

The screw shaft 1 extends in the X direction (axial direction) of a central axis AX. An outer circumferential track groove 11 is provided on an outer circumferential portion of the screw shaft 1. The outer circumferential track groove 11 extends spirally.

The nut 2 includes a nut body 20, a seal member 5, and caps 30 and 31. The nut body 20 includes a cylindrical portion 21 and a flange portion 22.

The cylindrical portion 21 extends in the X direction (axial direction) of the central axis AX. An inner circumferential track groove 222 is provided on an inner circumferential portion of the cylindrical portion 21. The screw shaft 1 penetrates through the inner circumferential portion of the cylindrical portion 21. The inner circumferential track groove 222 extends spirally. The plurality of balls 12 are arranged between the inner circumferential track groove 222 and the outer circumferential track groove 11. The cylindrical portion 21 has a cylindrical surface 211 on an outer circumferential portion thereof. The cylindrical portion 21 and the cylindrical surface 211 extend in a circumferential direction around the central axis AX. The flange portion 22 is provided at an end portion on the X2 side (the other side in the axial direction) of the nut body 20. That is, the flange portion 22 protrudes outward in a radial direction from the end portion on the X2 side of the nut body 20. The flange portion 22 has a plurality of attachment holes 221 penetrating in the axial direction.

The coolant flow path 4 is formed inside the nut 2. A coolant 40 flows inside the coolant flow path 4. As illustrated in FIG. 2, the coolant flow path 4 includes, for example, an inlet 401 provided in the flange portion 22, a first axial flow path (axial flow path) 43 and a second axial flow path (axial flow path) 45 provided in the nut body 20. In the nut body 20, a first end surface 23 is provided at each of one end portion (axial end portion) 24 in the axial direction and the other end portion (axial end portion) 25 in the axial direction. The first end surface 23 extends in the radial direction orthogonal to (intersecting) the axial direction. FIG. 1 illustrates the first end surface 23 provided at the one end portion (axial end portion) 24 in the axial direction. A recessed groove 26 and a tap hole 232 are formed in the first end surface 23. The seal member 5 is fitted into the recessed groove 26. The cap 30 has a central hole 301 at the center in the radial direction, and has a plurality of bolt holes 302 provided in the circumferential direction. The cap 30 has an annular shape. A bolt BL passes through the bolt hole 302 of the cap 30 and is fastened to the tap hole 232. As a result, the cap 30 is attached to the one end portion (axial end portion) 24 in the axial direction in a state of covering the first end surface 23, and seals the recessed groove 26.

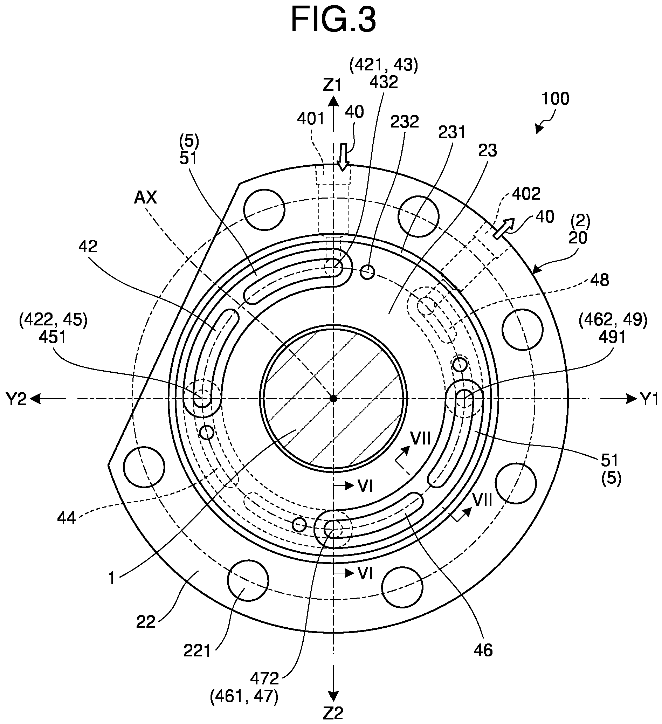

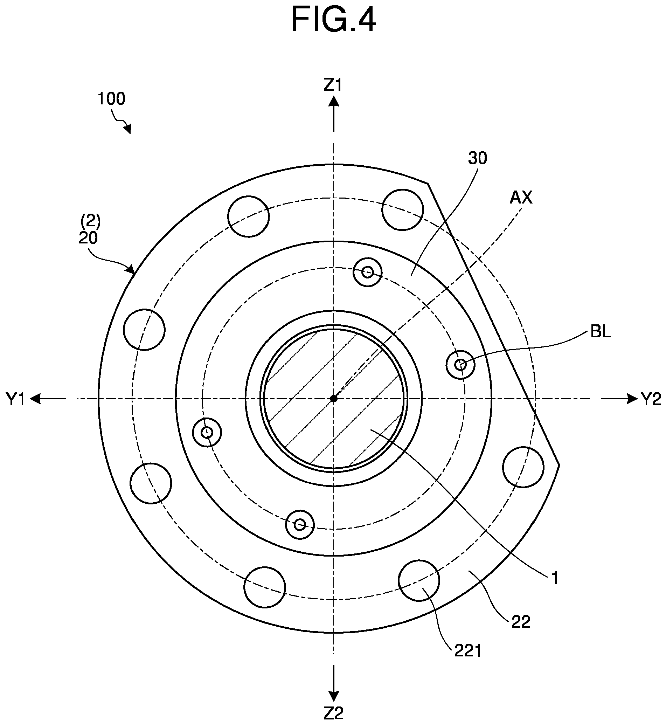

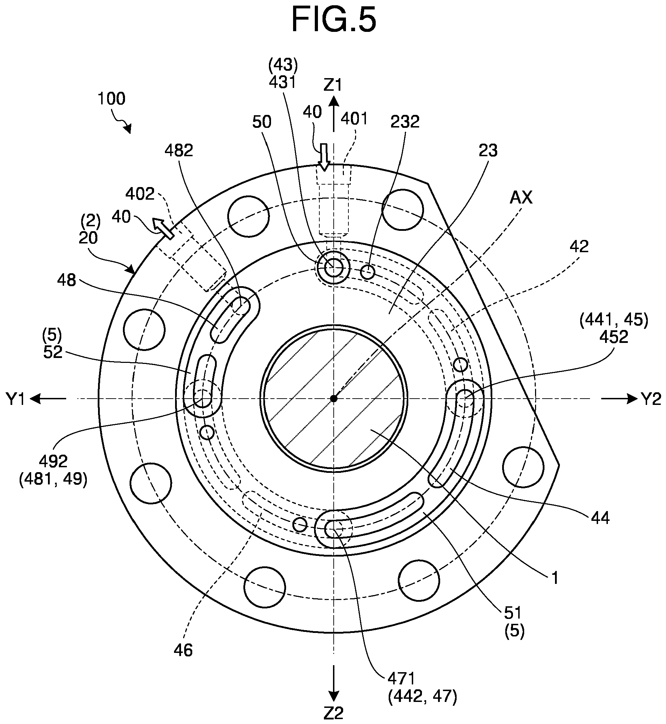

FIG. 3 is a cross-sectional view taken along line III-III of FIG. 2. FIG. 4 is a cross-sectional view taken along line IV-IV in FIG. 2. FIG. 5 is a view illustrating a state in which the cap is removed from FIG. 4.

As illustrated in FIGS. 3 and 5, the inlet 401 is provided on the Z1 side in the flange portion 22, and an outlet 402 is provided at a middle point between the Z1 side and the Y1 side. The coolant 40 flows into the coolant flow path 4 from the inlet 401 and then flows out from the outlet 402.

As illustrated in FIG. 3, two first seal members (seal members) 51 are provided at the one end portion (axial end portion) 24 of the nut body 20 in the axial direction. Specifically, one first seal member 51 extends in the circumferential direction from the Z1 side to the Y2 side on the first end surface 23. The one first seal member 51 overlaps a first circumferential flow path (circumferential flow path) 42 when viewed from the axial direction. The first circumferential flow path 42 extends in the circumferential direction of the nut body 20. The first circumferential flow path 42 extends in the circumferential direction of the nut body 20 from a flow path end portion 421 to a flow path end portion 422.

The other first seal member 51 extends in the circumferential direction from the Y1 side to the Z2 side on the first end surface 23. The other first seal member 51 overlaps a third circumferential flow path (circumferential flow path) 46 when viewed from the axial direction. The third circumferential flow path 46 extends in the circumferential direction of the nut body 20 from a flow path end portion 461 to a flow path end portion 462.

As illustrated in FIG. 5, the first seal member (seal member) 51 and a second seal member (seal member) 52 are provided at the other end portion (axial end portion) 25 of the nut body 20 in the axial direction. Specifically, the first seal member 51 extends in the circumferential direction from the Y2 side to the Z2 side on the first end surface 23. The first seal member 51 overlaps a second circumferential flow path (circumferential flow path) 44 when viewed from the axial direction. The second circumferential flow path 44 extends in the circumferential direction of the nut body 20 from a flow path end portion 441 to a flow path end portion 442. The second seal member 52 extends in the circumferential direction from the middle point between the Z1 side and the Y1 side to the Y1 side on the first end surface 23. The second seal member 52 overlaps a fourth circumferential flow path (circumferential flow path) 48 when viewed from the axial direction. The fourth circumferential flow path 48 extends in the circumferential direction of the nut body 20 from a flow path end portion 481 to a flow path end portion 482.

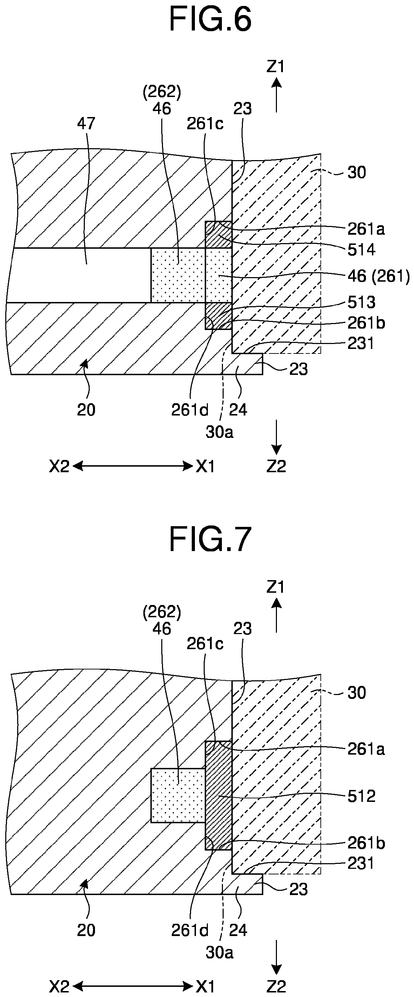

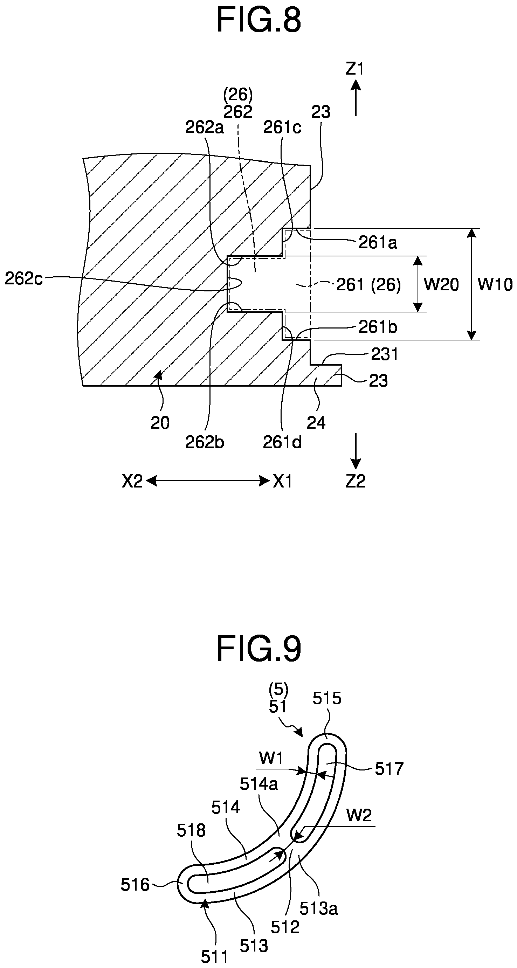

FIG. 6 is a cross-sectional view taken along line VI-VI of FIG. 3. FIG. 7 is a cross-sectional view taken along line VII-VII of FIG. 3. FIG. 8 is a cross-sectional view in which the seal member and the cap are removed from FIG. 7.

As illustrated in FIG. 8, the recessed groove 26 is provided at each of the one end portion (axial end portion) 24 and the other end portion (axial end portion) 25 of the nut body 20 in the axial direction. Hereinafter, the recessed groove 26 provided at the one end portion 24 in the axial direction will be described, but the recessed groove 26 provided at the other end portion 25 has a similar configuration.

As illustrated in FIG. 8, the recessed groove 26 includes a first groove 261 and a second groove 262. As illustrated in FIG. 8, the first groove 261 is recessed from the first end surface 23 toward the X2 side (axial center side). The first groove 261 faces inner walls 261a and 261b and first bottom surfaces 261c and 261d. The inner walls 261a and 261b are orthogonal to (intersect) the first end surface 23 and extend toward the X2 side. The inner wall 261a and the inner wall 261b face each other in the radial direction. The first bottom surfaces 261c and 261d extend along the first end surface 23. Specifically, the first bottom surface 261c extends from an end on the X2 side of the inner wall 261a toward the Z2 side. The first bottom surface 261d extends from an end on the X2 side of the inner wall 261b toward the Z1 side. A width of the first groove 261 in the radial direction is a width W10.

As illustrated in FIG. 8, the second groove 262 is recessed from the first bottom surfaces 261c and 261d toward the X2 side (axial center side). The second groove 262 communicates with the first groove 261. The second groove 262 faces inner walls 262a and 262b and a second bottom surface 262c. The inner walls 262a and 262b are orthogonal to (intersect) the first end surface 23 and extend toward the X2 side. The inner wall 262a and the inner wall 262b face each other in the radial direction. The second bottom surface 262c extends along the first end surface 23. The second bottom surface 262c connects an end on the X2 side of the inner wall 262a and an end on the X2 side of the inner wall 262b. Each of the first groove 261 and the second groove 262 has a rectangular cross section as indicated by a two-dot chain line. A width of the second groove 262 in the radial direction is a width W20. The width W10 is larger than the width W20. Therefore, the first bottom surfaces 261c and 261d are exposed when the recessed groove 26 is viewed from the axial direction.

As illustrated in FIG. 6, in a cross section of a portion overlapping a third axial flow path (axial flow path) 47 when viewed from the axial direction, the first groove 261 and the second groove 262 communicate with the third axial flow path 47. That is, as illustrated in FIGS. 6 and 7, the third circumferential flow path (circumferential flow path) 46 is formed by the first groove 261 and the second groove 262. The first circumferential flow path 42, the second circumferential flow path 44, and the fourth circumferential flow path 48, which are other circumferential flow paths, are also formed by the first groove 261 and the second groove 262.

Here, the first seal member (seal member) 51 is fitted into the first groove 261. Specifically, the first seal member (seal member) 51 is accommodated in the first groove 261 in a state of being in contact with the inner walls 261a and 261b, the first bottom surfaces 261c and 261d, and a back surface 30a of the cap 30. Accordingly, the recessed groove 26 is sealed by the cap 30.

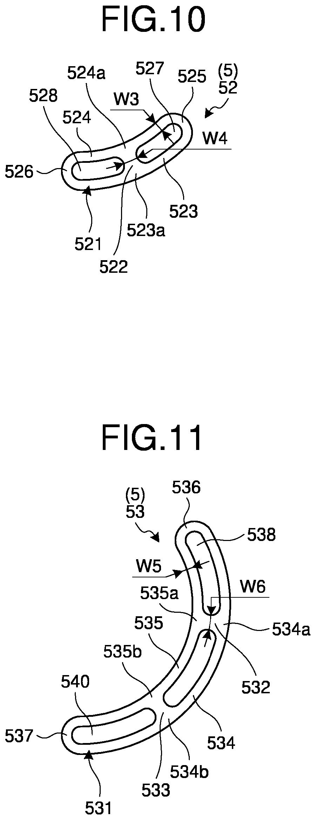

Next, the seal member will be described. FIG. 9 is a plan view of the seal member illustrated in FIGS. 3 and 5. FIG. 10 is a plan view of the seal member illustrated in FIG. 5. FIG. 11 is a schematic plan view illustrating another example of the seal member.

As illustrated in FIG. 9, the first seal member (seal member) 51 includes a frame body 511 and a reinforcing portion 512 when viewed from the axial direction. The frame body 511 extends in an arc shape in the circumferential direction of the nut body 20. In other words, a longitudinal direction of the frame body 511 is the circumferential direction of the nut body 20. The frame body 511 has an outer circumferential portion 513, an inner circumferential portion 514, side end portions 515 and 516, and the reinforcing portion 512. The outer circumferential portion 513 and the inner circumferential portion 514 extend in an arc shape. The outer circumferential portion 513 is positioned on an outer side of the nut body 20 in the radial direction with respect to the inner circumferential portion 514. Circumferential end portions of the outer circumferential portion 513 and circumferential end portions of the inner circumferential portion 514 are connected via the side end portions 515 and 516. A first portion 513a of the outer circumferential portion 513 and a second portion 514a of the inner circumferential portion 514 are connected via the reinforcing portion 512. The reinforcing portion 512 extends in the radial direction of the nut body 20. The reinforcing portion 512 is positioned between the two side end portions 515 and 516. In the present embodiment, the reinforcing portion 512 is provided at the centers of the two side end portions 515 and 516 in the circumferential direction. That is, the first portion 513a is positioned at the center of the outer circumferential portion 513 in the circumferential direction, and the second portion 514a is positioned at the center of the inner circumferential portion 514 in the circumferential direction. The reinforcing portion 512 crosses one opening portion formed by the frame body 511. Therefore, the first seal member 51 has two opening portions 517 and 518. Widths of the outer circumferential portion 513, the inner circumferential portion 514, and the side end portions 515 and 516 are all the same width W1. A width of the reinforcing portion 512 is a width W2. The width W2 is the same as or larger than the width W1. That is, the width W2 is equal to or larger than the width W1.

The first seal member 51 is a prism having a square cross-sectional shape. Specifically, all of the frame body 511 and the reinforcing portion 512 are prisms having a square cross-sectional shape. Therefore, for example, as illustrated in FIG. 6, three side surfaces of the outer circumferential portion 513 of the first seal member 51 are in surface contact with the inner wall 261b and the first bottom surface 261d in the first groove 261, and the back surface 30a of the cap 30. Three side surfaces of the inner circumferential portion 514 of the first seal member 51 are in surface contact with the inner wall 261a and the first bottom surface 261c in the first groove 261, and the back surface 30a of the cap 30. As illustrated in FIG. 6, an inner circumferential surface of the outer circumferential portion 513 of the first seal member 51 is flush with the inner wall 262b of the second groove 262, and an inner circumferential surface of the inner circumferential portion 514 of the first seal member 51 is flush with the inner wall 262a of the second groove 262.

As illustrated in FIG. 10, the second seal member (seal member) 52 includes a frame body 521 and a reinforcing portion 522 when viewed in the axial direction. A length of the second seal member 52 in the circumferential direction is smaller than a length of the first seal member 51 in the circumferential direction. The frame body 521 extends in an arc shape in the circumferential direction of the nut body 20. The frame body 521 has an outer circumferential portion 523, an inner circumferential portion 524, side end portions 525 and 526, and a reinforcing portion 522. A first portion 523a of the outer circumferential portion 523 and a second portion 524a of the inner circumferential portion 524 are connected via the reinforcing portion 522. In the present embodiment, the reinforcing portion 522 is provided at the centers of the two side end portions 525 and 526 in the circumferential direction. The second seal member 52 has two opening portions 527 and 528. Widths of the outer circumferential portion 523, the inner circumferential portion 524, and the side end portions 525 and 526 are a width W3. A width of the reinforcing portion 522 is a width W4. The width W4 is the same as or larger than the width W3. That is, the width W4 is equal to or larger than the width W3.

As illustrated in FIG. 11, a third seal member (seal member) 53 includes a frame body 531 and reinforcing portions 532 and 533 when viewed in the axial direction. A length of the third seal member 53 in the circumferential direction is larger than the length of the first seal member 51 in the circumferential direction. The frame body 531 extends in an arc shape in the circumferential direction of the nut body 20. The frame body 531 has an outer circumferential portion 534, an inner circumferential portion 535, side end portions 536 and 537, and reinforcing portions 532 and 533. A first portion 534a of the outer circumferential portion 534 and a second portion 535a of the inner circumferential portion 535 are connected via the reinforcing portion 532. A first portion 534b of the outer circumferential portion 534 and a second portion 535b of the inner circumferential portion 535 are connected via the reinforcing portion 533. In the present embodiment, the reinforcing portion 532 and the reinforcing portion 533 are arranged at equal intervals in the circumferential direction between the side end portion 536 and the side end portion 537. Therefore, lengths of opening portions 538, 539, and 540 in the circumferential direction are the same. In the present invention, positions of the reinforcing portions 532 and 533 in the circumferential direction are not limited, and the reinforcing portions 532 and 533 do not have to be arranged at equal intervals between the side end portion 536 and the side end portion 537. Widths of the outer circumferential portion 534, the inner circumferential portion 535, and the side end portions 536 and 537 are a width W5. A width of each of the reinforcing portions 532 and 533 is a width W6. The width W6 is the same as or larger than the width W5. That is, the width W6 is equal to or larger than the width W5.

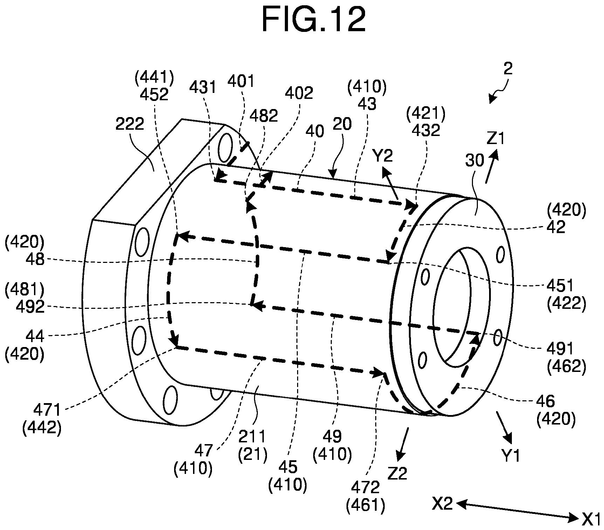

Next, a flow of the coolant will be described. FIG. 12 is a schematic view illustrating a flow of the coolant in the coolant flow path in the nut.

An axial flow path 410 includes a first axial flow path 43, a second axial flow path 45, a third axial flow path 47, and a fourth axial flow path 49. A circumferential flow path 420 includes the first circumferential flow path 42, the second circumferential flow path 44, the third circumferential flow path 46, and the fourth circumferential flow path 48.

First, the coolant 40 flows into the first axial flow path 43 from the inlet 401 via a flow path end portion 431. The first axial flow path 43 has the flow path end portion 431 and a flow path end portion 432. That is, the coolant 40 flows from the flow path end portion 431 to the flow path end portion 432. Thereafter, the coolant 40 flows along the first circumferential flow path 42 from the flow path end portion 421 to the flow path end portion 422, and flows along the second axial flow path 45 from a flow path end portion 451 to a flow path end portion 452. Thereafter, the coolant 40 flows along the second circumferential flow path 44 from the flow path end portion 441 to the flow path end portion 442, flows along the third axial flow path 47 from a flow path end portion 471 to a flow path end portion 472, and flows along the third circumferential flow path 46 from the flow path end portion 461 to the flow path end portion 462. Then, the coolant 40 flows along the fourth axial flow path 49 from a flow path end portion 491 to a flow path end portion 492, flows along the fourth circumferential flow path 48 from the flow path end portion 481 to the flow path end portion 482, and then flows out of the nut 2 from the outlet 402. In this manner, the coolant 40 alternately flows through the axial flow path 410 and the circumferential flow path 420 to uniformly cool the entire nut 2.

As described above, the ball screw device 100 includes the nut 2 having the inner circumferential track groove 222 provided on the inner circumferential portion, the screw shaft 1 penetrating through the nut 2 and in which the outer circumferential track groove 11 is provided on the outer circumferential portion, the plurality of balls 12 arranged between the inner circumferential track groove 222 and the outer circumferential track groove 11, and the coolant flow path 4 provided inside the nut 2 and through which the coolant 40 flows. The nut 2 includes the nut body 20 in which the inner circumferential track groove 222 is provided and the recessed groove 26 is provided on the first end surface 23 extending in the radial direction at each of the one end portion (axial end portion) 24 in the axial direction and the other end portion (axial end portion) 25 in the axial direction, the first seal member (seal member) 51 fitted into a part of the recessed groove 26, and the annular cap 31 attached to the axial end portion in a state of covering the first end surface 23, and sealing the recessed groove 26. The recessed groove 26 is a recess recessed from the first end surface 23 toward the axial center side, and includes the first groove 261 facing the inner walls 261a and 261b and the first bottom surfaces (bottom portions) 261c and 261d extending along the first end surface 23 from the end portions of the inner walls 261a and 261b on the axial center side, and the second groove 262 recessed from the first bottom surfaces (bottom portions) 261c and 261d toward the axial center side. When viewed from the axial direction, the first groove 261 and the second groove 262 extend in the circumferential direction of the nut body 20, the width W10 of the first groove 261 is larger than the width W20 of the second groove 262, and the first seal member (seal member) 51 is fitted into the first groove 261. The coolant flow path 4 includes a plurality of axial flow paths 410 provided in the nut body 20 and extending in the axial direction, and the circumferential flow path 420 connecting axial end portions of two axial flow paths 410 among the plurality of axial flow paths 410 and extending in the circumferential direction of the nut body 20, and the circumferential flow path 420 is formed by sealing the recessed groove 26 of the nut body 20 with the cap 31. The first seal member (seal member) 51 includes the annular frame body 511 and the reinforcing portion 512 crossing the opening portion inside the frame body 511 when viewed from the axial direction, the frame body 511 has the outer circumferential portion (long side) 513 and the inner circumferential portion (long side) 514 extending in an arc shape along the inner walls 261a and 261b of the first groove 261, and two side end portions 515 and 516 connecting the circumferential end portion of the outer circumferential portion 513 and the circumferential end portion of the inner circumferential portion 514, and the reinforcing portion 512 is positioned between the two side end portions 515 and 516 and connects the outer circumferential portion 513 and the inner circumferential portion 514.

In the ball screw of Patent Literature 1 described above, the seal member has an arc shape extending in the circumferential direction of the nut when viewed from the axial direction of the nut. Therefore, for example, when the sealing member is fastened to the axial end portion of the nut with a bolt, the seal member receives a force in the circumferential direction or the radial direction when the bolt is fastened. In addition, in a case where thermal deformation occurs at the axial end portion of the nut during use of the ball screw device, a force is applied to the seal member in the circumferential direction or the radial direction. In these cases, the seal member may be deformed, as a result of which, sealability achieved by the seal member may be deteriorated.

On the other hand, the first seal member (seal member) 51 according to the present embodiment includes the annular frame body 511 and the reinforcing portion 512 that connects two long sides (the outer circumferential portion 513 and the inner circumferential portion 514) of the frame body 511. Therefore, rigidity becomes higher than that of the seal member without the reinforcing portion 512, and a deformation amount becomes smaller when a force is applied in the circumferential direction or the radial direction of the nut 2. As a result, it is possible to provide the ball screw device 100 including the first seal member 51 whose deformation amount is smaller when attached to the nut 2 or during use of the ball screw device 100.

In addition, the second seal member (seal member) 52 includes the annular frame body 521 and the reinforcing portion 522 that connects the long sides (the outer circumferential portion 523 and the inner circumferential portion 524) of the frame body 521 when viewed from the axial direction.

The second seal member 52 has a smaller length in the circumferential direction on the first end surface 23 than the first seal member 51. Specifically, the first seal member 51 has a length of 1/4 of the entire circumference of the first end surface 23 in the circumferential direction, whereas the second seal member 52 has a length of 1/8 of the entire circumference of the first end surface 23 in the circumferential direction. As described above, even in the second seal member 52 having a length smaller than that of the first seal member 51 in the circumferential direction, the reinforcing portion 522 connecting the outer circumferential portion 523 and the inner circumferential portion 524 is provided, so that the rigidity becomes higher than that of the seal member without the reinforcing portion 522, and the deformation amount becomes smaller when a force is applied in the circumferential direction or the radial direction.

The third seal member (seal member) 53 includes the annular frame body 531 and the reinforcing portions 532 and 533 connecting the long sides (the outer circumferential portion 534 and the inner circumferential portion 535) of the frame body 531 when viewed from the axial direction. The plurality of reinforcing portions 532 and 533 are provided, and the plurality of reinforcing portions 532 and 533 are arranged at equal intervals in the circumferential direction between the two side end portions.

Therefore, the rigidity of the entire third seal member 53 is more uniform as compared with a seal member in which the plurality of reinforcing portions 532 and 533 are arranged at unequal intervals in the circumferential direction. Since a force on the third seal member 53 may be input from various directions such as the circumferential direction and the radial direction, the deformation amount becomes smaller when the third seal member 53 receives a force in the circumferential direction or the radial direction.

One reinforcing portion 512 is provided in the first seal member 51, one reinforcing portion 512 is provided in the second seal member 52, the reinforcing portion 512 connects the center of the outer circumferential portion 513 in the circumferential direction and the center of the inner circumferential portion 514 in the circumferential direction, and the reinforcing portion 522 connects the center of the outer circumferential portion 523 in the circumferential direction and the center of the inner circumferential portion 524 in the circumferential direction. Therefore, the rigidity of the entire first seal member 51 and the rigidity of the entire second seal member 52 become more uniform as compared with a case where portions other than the centers of the outer circumferential portions 513 and 523 in the circumferential direction and portions other than the center of the inner circumferential portions 514 and 524 in the circumferential direction are connected by the reinforcing portions 512 and 522. Since a force on the first seal member 51 and the second seal member 52 may be input from various directions such as the circumferential direction and the radial direction, the deformation amount becomes smaller when the first seal member 51 and the second seal member 52 receive a force in the circumferential direction or the radial direction.

Further, the frame body 511 and the reinforcing portion 512 of the first seal member 51 are prismatic bodies having a quadrangular cross section, and three side surfaces of the prismatic bodies are in surface contact with the inner walls 261a and 261b and the first bottom surfaces 261c and 261d in the first groove 261, and the back surface 30a of the cap 30. Accordingly, the first seal member 51 can be stably arranged between the inner walls 261a and 261b, the first bottom surfaces 261c and 261d, and the back surface 30a of the cap 30.

### [First Modification]

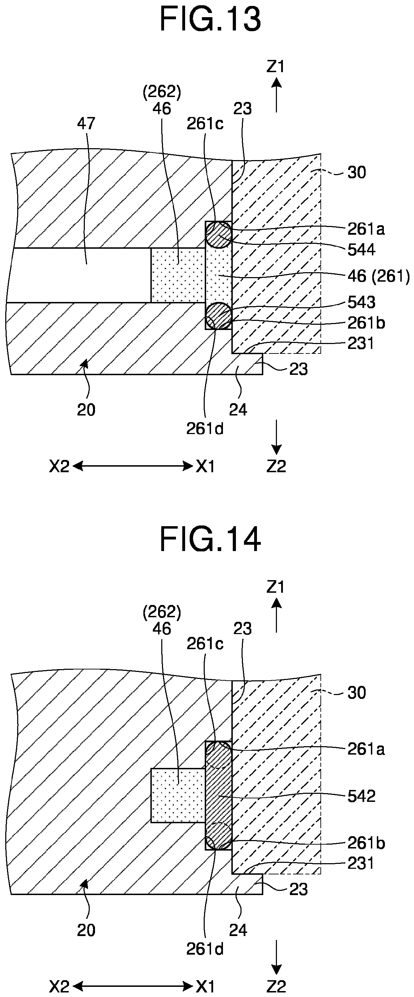

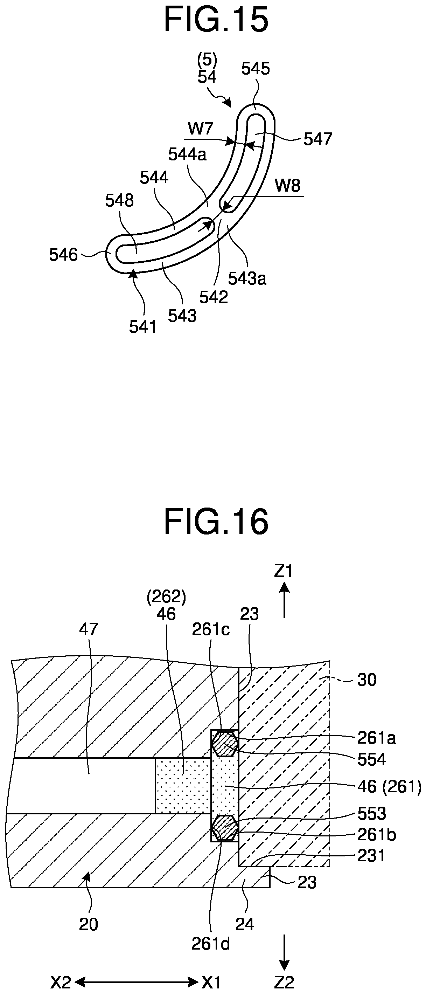

Hereinafter, a first modification will be described. FIG. 13 is a cross-sectional view of a part of the ball screw device according to the first modification, and is a view corresponding to FIG. 6. FIG. 14 is a cross-sectional view of a part of the ball screw device according to the first modification, and is a view corresponding to FIG. 7. FIG. 15 is a plan view of a seal member according to the first modification.

In the first modification, as illustrated in FIGS. 13 and 14, a fourth seal member (seal member) 54 having a circular cross-sectional shape is applied. Details will be described below.

As illustrated in FIG. 15, the fourth seal member (seal member) 54 includes a frame body 541 and a reinforcing portion 542 when viewed in the axial direction. The frame body 541 extends in an arc shape in the circumferential direction of the nut body 20 when viewed from the axial direction of the nut 2. The frame body 541 has an outer circumferential portion 543, an inner circumferential portion 544, side end portions 545 and 546, and a reinforcing portion 542. The outer circumferential portion 543 and the inner circumferential portion 544 extend in an arc shape. The outer circumferential portion 543 is positioned on an outer side of the nut body 20 in the radial direction with respect to the inner circumferential portion 544. Circumferential end portions of the outer circumferential portion 543 and circumferential end portions of the inner circumferential portion 544 are connected via the side end portions 545 and 546. A first portion 543a of the outer circumferential portion 543 and a second portion 544a of the inner circumferential portion 544 are connected via the reinforcing portion 542. The reinforcing portion 542 extends in the radial direction of the nut body 20. The reinforcing portion 542 is positioned between the two side end portions 545 and 546. In the first modification, the reinforcing portion 542 is provided at the centers of the two side end portions 545 and 546 in the circumferential direction. The reinforcing portion 542 crosses one opening portion formed by the frame body 541. Therefore, the fourth seal member 54 has two opening portions 547 and 548. Widths of the outer circumferential portion 543, the inner circumferential portion 544, and the side end portions 545 and 546 are all the same width W7. A width of the reinforcing portion 542 is a width W8. The width W7 is the same as or larger than the width W8. That is, the width W7 is equal to or larger than the width W8.

As illustrated in FIGS. 13 and 14, in the fourth seal member 54, all of the frame body 541 and the reinforcing portion 542 are cylindrical bodies having a circular cross section, and outer surfaces of the cylindrical bodies are in line contact with the inner walls 261a and 261b and the first bottom surfaces 261c and 261d in the first groove 261, and the back surface 30a of the cap 30. That is, as illustrated in FIG. 13, the outer circumferential portion 543 of the fourth seal member 54 is in line contact with an inner wall 264a and a fourth bottom surface 264c in a fourth groove 264, and the back surface 30a of the cap 30. The inner circumferential portion 544 of the fourth seal member 54 is in line contact with an inner wall 264b and a fourth bottom surface 264d in the fourth groove 264, and the back surface 30a of the cap 30.

As described above, in the first modification, in the fourth seal member 54, all of the frame body 541 and the reinforcing portion 542 are cylindrical bodies having a circular cross section. Accordingly, the outer surface of the fourth seal member 54 uniformly contacts the inner walls 261a and 261b, the first bottom surfaces 261c and 261d, and the back surface 30a of the cap 31, so that the airtightness achieved by the fourth seal member 54 is more reliably ensured. A part of the fourth seal member 54 may be a cylindrical body having a circular cross section.

### [Second Modification]

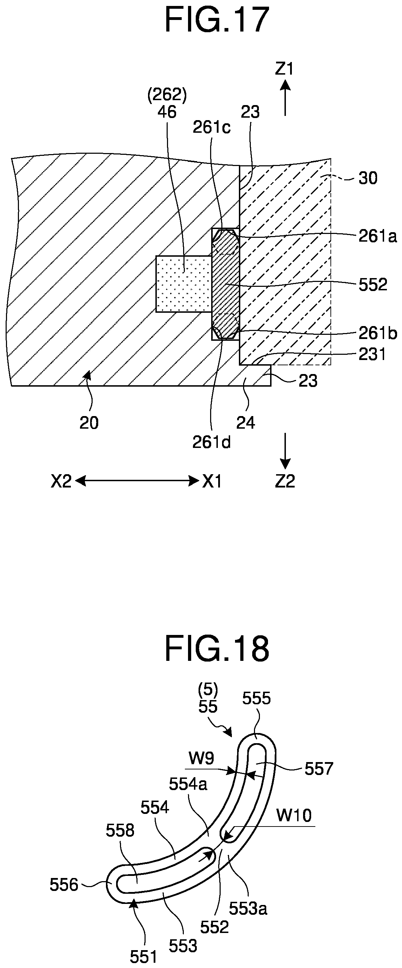

Hereinafter, a second modification will be described. FIG. 16 is a cross-sectional view of a part of the ball screw device according to the second modification, and is a view corresponding to FIG. 6. FIG. 17 is a cross-sectional view of a part of the ball screw device according to the second modification, and is a view corresponding to FIG. 7. FIG. 18 is a plan view of a seal member according to the second modification.

In the second modification, as illustrated in FIGS. 16 and 17, a fifth seal member (seal member) 55 having a regular hexagonal cross-sectional shape is applied. Details will be described below.

As illustrated in FIG. 18, the fifth seal member (seal member) 55 includes a frame body 551 and a reinforcing portion 552 when viewed in the axial direction. The frame body 551 extends in an arc shape in the circumferential direction of the nut body 20. The frame body 551 has an outer circumferential portion 553, an inner circumferential portion 554, side end portions 555 and 556, and a reinforcing portion 552. The outer circumferential portion 553 and the inner circumferential portion 554 extend in an arc shape. The outer circumferential portion 553 is positioned on an outer side of the nut body 20 in the radial direction with respect to the inner circumferential portion 554. Circumferential end portions of the outer circumferential portion 553 and circumferential end portions of the inner circumferential portion 554 are connected via the side end portions 555 and 556. A first portion 553a of the outer circumferential portion 553 and a second portion 554a of the inner circumferential portion 554 are connected via the reinforcing portion 552. The reinforcing portion 552 extends in the radial direction of the nut body 20. The reinforcing portion 552 is positioned between the two side end portions 555 and 556. In the second modification, the reinforcing portion 552 is provided at the centers of the two side end portions 555 and 556 in the circumferential direction. The reinforcing portion 552 crosses one opening portion formed by the frame body 551. Therefore, the fifth seal member 55 has two opening portions 557 and 558. Widths of the outer circumferential portion 553, the inner circumferential portion 554, and the side end portions 555 and 556 are all the same width W9. A width of the reinforcing portion 552 is a width W10. The width W9 is the same as the width W10 or larger than the width W9. That is, the width W9 is equal to or larger than the width W10.

As illustrated in FIGS. 16 and 17, the fifth seal member 55 is a prismatic body having a regular hexagonal cross section. Specifically, the frame body 551 and the reinforcing portion 552 are prismatic bodies having a regular hexagonal cross section.

Therefore, for example, as illustrated in FIG. 16, one side surface of the outer circumferential portion 553 of the fifth seal member 55 is in surface contact with the inner wall 261b of the first groove 261. One side surface of the inner circumferential portion 554 of the fifth seal member 55 is in surface contact with the inner wall 261a of the first groove 261. Accordingly, airtightness achieved by the fifth seal member 55 is improved.

### Reference Signs List

1 SCREW SHAFT
11 OUTER CIRCUMFERENTIAL TRACK GROOVE
12 BALL
100 BALL SCREW DEVICE
2 NUT
20 NUT BODY
21 CYLINDRICAL PORTION
211 CYLINDRICAL SURFACE
22 FLANGE PORTION
221 ATTACHMENT HOLE
222 INNER CIRCUMFERENTIAL TRACK GROOVE
23 FIRST END SURFACE
232 TAP HOLE
24 ONE END PORTION IN AXIAL DIRECTION (AXIAL END PORTION)
25 THE OTHER END PORTION IN AXIAL DIRECTION (AXIAL END PORTION)
26 RECESSED GROOVE
261 FIRST GROOVE
261a INNER WALL
261b INNER WALL
261c FIRST BOTTOM SURFACE (BOTTOM PORTION)
261d FIRST BOTTOM SURFACE (BOTTOM PORTION)
262 SECOND GROOVE
262a INNER WALL
262b INNER WALL
262c SECOND BOTTOM SURFACE
30 CAP
30a BACK SURFACE
301 CENTRAL HOLE
302 BOLT HOLE
31 CAP
4 COOLANT FLOW PATH
40 COOLANT
401 INLET
402 OUTLET
410 AXIAL FLOW PATH
420 CIRCUMFERENTIAL FLOW PATH
42 FIRST CIRCUMFERENTIAL FLOW PATH (CIRCUMFERENTIAL FLOW PATH)
421 FLOW PATH END PORTION
422 FLOW PATH END PORTION
43 FIRST AXIAL FLOW PATH (AXIAL FLOW PATH)
431 FLOW PATH END PORTION
432 FLOW PATH END PORTION
44 SECOND CIRCUMFERENTIAL FLOW PATH (CIRCUMFERENTIAL FLOW PATH)
441 FLOW PATH END PORTION
442 FLOW PATH END PORTION
45 SECOND AXIAL FLOW PATH (AXIAL FLOW PATH)
451 FLOW PATH END PORTION
452 FLOW PATH END PORTION
46 THIRD CIRCUMFERENTIAL FLOW PATH (CIRCUMFERENTIAL FLOW PATH)
461 FLOW PATH END PORTION
462 FLOW PATH END PORTION
47 THIRD AXIAL FLOW PATH (AXIAL FLOW PATH)
471 FLOW PATH END PORTION
472 FLOW PATH END PORTION
48 FOURTH CIRCUMFERENTIAL FLOW PATH (CIRCUMFERENTIAL FLOW PATH)
481 FLOW PATH END PORTION
482 FLOW PATH END PORTION
49 FOURTH AXIAL FLOW PATH (AXIAL FLOW PATH)
491 FLOW PATH END PORTION
492 FLOW PATH END PORTION
5 SEAL MEMBER
51 FIRST SEAL MEMBER (SEAL MEMBER)
511 FRAME BODY
512 REINFORCING PORTION
513 OUTER CIRCUMFERENTIAL PORTION (LONG SIDE)
513a FIRST PORTION
514 INNER CIRCUMFERENTIAL PORTION (LONG SIDE)
514a SECOND PORTION
515 SIDE END PORTION
516 SIDE END PORTION
517 OPENING PORTION
518 OPENING PORTION
52 SECOND SEAL MEMBER (SEAL MEMBER)
521 FRAME BODY
522 REINFORCING PORTION
523 OUTER CIRCUMFERENTIAL PORTION (LONG SIDE)
523a FIRST PORTION
524 INNER CIRCUMFERENTIAL PORTION (LONG SIDE)
524a SECOND PORTION
525 SIDE END PORTION
526 SIDE END PORTION
527 OPENING PORTION
528 OPENING PORTION
53 THIRD SEAL MEMBER (SEAL MEMBER)
531 FRAME BODY
532 REINFORCING PORTION
533 REINFORCING PORTION
534 OUTER CIRCUMFERENTIAL PORTION (LONG SIDE)
534a FIRST PORTION
534b FIRST PORTION
535 INNER CIRCUMFERENTIAL PORTION (LONG SIDE)
535a SECOND PORTION
535b SECOND PORTION
536 SIDE END PORTION
537 SIDE END PORTION
538 OPENING PORTION
539 OPENING PORTION
540 OPENING PORTION
54 FOURTH SEAL MEMBER (SEAL MEMBER)
541 FRAME BODY
542 REINFORCING PORTION
543 OUTER CIRCUMFERENTIAL PORTION (LONG SIDE)
543a FIRST PORTION
544 INNER CIRCUMFERENTIAL PORTION (LONG SIDE)
544a SECOND PORTION
545 SIDE END PORTION
546 SIDE END PORTION
547 OPENING PORTION
548 OPENING PORTION
55 FIFTH SEAL MEMBER (SEAL MEMBER)
551 FRAME BODY
552 REINFORCING PORTION
553 OUTER CIRCUMFERENTIAL PORTION (LONG SIDE)
553a FIRST PORTION
554 INNER CIRCUMFERENTIAL PORTION (LONG SIDE)
554a SECOND PORTION
555 SIDE END PORTION
556 SIDE END PORTION
557 OPENING PORTION
558 OPENING PORTION
AX CENTRAL AXIS
BL BOLT

## Claims

1. A ball screw device comprising:
a nut having an inner circumferential track groove provided on an inner circumferential portion and including a plurality of axial flow paths through which a coolant flows in an axial direction;
a screw shaft penetrating through the nut and having an outer circumferential track groove provided on an outer circumferential portion; and
a plurality of balls arranged between the inner circumferential track groove and the outer circumferential track groove, wherein
the nut includes:
a nut body in which a recessed groove is provided on a first end surface arranged at at least one axial end portion of one end portion or the other end portion in the axial direction along a central axis;
a seal member fitted into the recessed groove; and
a cap attached to the axial end portion in a state of covering the recessed groove of the first end surface, and closing a circumferential flow path in which the coolant flows in a circumferential direction in the recessed groove communicating between end portions of two of the plurality of axial flow paths,
the recessed groove includes:
a first groove which is a recess recessed from the first end surface toward an axial center side and into which the seal member is fitted, the recess having an outer shape extending in the circumferential direction of the nut when viewed from the axial direction of the nut; and
a second groove which is provided inside the first groove when viewed in the axial direction of the nut, which is recessed from a bottom portion of the first groove toward the axial center side, and in which the end portions of the two axial flow paths are exposed, and
the seal member includes:
a frame body extending along the first groove; and
a reinforcing portion connecting a pair of long sides of the frame body.

2. The ball screw device according to claim 1, wherein
one reinforcing portion is provided, and
the one reinforcing portion connects centers of the pair of long sides in the circumferential direction.

3. The ball screw device according to claim 1, wherein
a plurality of the reinforcing portions are provided, and
the plurality of reinforcing portions are arranged at equal intervals in the circumferential direction.

4. The ball screw device according to any one of claims 1 to 3, wherein
the first groove faces an inner wall extending from the first end surface to the axial center side and a bottom portion extending from an end portion of the inner wall on the axial center side along the first end surface, and
the seal member includes a cylindrical body having a circular cross section, and an outer surface of the cylindrical body is in line contact with the inner wall and the bottom portion in the first groove, and a back surface of the cap.

5. The ball screw device according to any one of claims 1 to 3, wherein
the first groove faces an inner wall extending from the first end surface to the axial center side and a bottom portion extending from an end portion of the inner wall on the axial center side along the first end surface, and
the seal member includes a prismatic body having a polygonal cross-sectional shape.

6. The ball screw device according to claim 5, wherein
the seal member includes a prismatic body having a quadrangular cross section, and
three side surfaces of the prismatic body are in surface contact with the inner wall and the bottom portion in the first groove, and the back surface of the cap.

7. The ball screw device according to claim 5, wherein
the seal member includes a prismatic body having a regular hexagonal cross section, and
one side surface of the prismatic body is in surface contact with the inner wall in the first groove.
